# FASCICULE DE BREVET EUROPEEN

(11) **EP 0 429 378 B1**
(45) Date de publication et mention de la délivrance du brevet: **09.03.1994**
(21) Numéro de dépôt: 90420495.5
(22) Date de dépôt: 19.11.1990
(51) Int. Cl.: G01D 5/26

(54) **Capteur de direction et d'amplitude de déplacement**
Verlagerungsrichtungs- und Amplitudensensor
Displacement direction and amplitude sensor

(30) Priorité: 22.11.1989 FR 8915659
(43) Date de publication de la demande: 29.05.1991
(73) Titulaire: CENTRE NATIONAL DE LA RECHERCHE SCIENTIFIQUE (CNRS), 75700 Paris Cedex 07 (FR); CENTRE NATIONAL DU MACHINISME AGRICOLE, DU GENIE RURAL, DES EAUX ET DES FORETS (CEMAGREF), F-92160 Antony (FR)
(72) Inventeur: Clauss, Gilles, F-38340 Voreppe (FR); Chartier, Germain, F-38000 Grenoble (FR); Taillandier, Jean-Michel, F-38320 Eybens (FR); Boulee, Pascal, Bretenières, 21110 Genlis (FR)
(74) Mandataire: de Beaumont, Michel

(56) Documents cités:
- EP-A- 0 126 223
- FR-A- 2 591 330
- APPLIED OPTICS, vol. 24, no. 15, 1 août 1985, New York, US, pages 2369-2372; Johnson et al: "One- and two-dimensional, differential, reflective fibre displacement sensors"

## Description

La présente invention concerne le domaine de la mesure de la direction et de l'amplitude de petits déplacements.

Elle trouve des applications dans le domaine de la mesure de la force et de la direction du vent, c'est-à-dire à la fabrication d'anémomètre-girouette ; de la mesure du débit d'un fluide ; de la détection du déplacement imprimé à un manche à balai de télécommande, par exemple un "joystick" de jeu électronique...

Un objet de la présente invention est de fabriquer un tel capteur qui soit particulièrement simple et compact.

Un autre objet de la présente invention est de prévoir un tel capteur qui soit pratiquement insensible a des parasites électromagnétiques, tels que des parasites atmosphériques.

Un autre objet de la présente invention est de prévoir un tel capteur qui soit utilisable dans des environnements sévères de température et d'humidité, et qui notamment soit peu sensible au givre et pouvant donc être utilisé en montagne ou en mer.

Un autre objet de la présente invention est de prévoir un procédé de fabrication d'un tel capteur.

La présente invention utilise un capteur dont le principe est décrit dans le cadre d'une autre application dans Applied Optics, Vol. 24, N° 15, 01 aout 1985, Johnson et al.

Plus particulièrement, la présente invention prévoit un capteur de direction et d'amplitude d'un déplacement comprenant un miroir solidaire d'un élément mobile et un ensemble photoémetteur et photorécepteur solidaire d'un repère fixe, ledit ensemble comprenant une fibre optique centrale émettant un cône de lumière vers le miroir et des fibres optiques réceptrices dont chacune est en contact avec la fibre centrale ; le miroir étant circulaire et son diamètre et sa distance axiale de l'extrémité des fibres étant tels, en position centrée, que son diamètre correspond sensiblement à celui du cône de lumière émis par la fibre centrale et que le cône de lumière renvoyé tangente sensiblement les bords radiaux externes des fibres réceptrices. Le miroir est monté sur la paroi transversale extrême d'un tube, perpendiculairement à l'axe de ce tube et de façon centrée, l'autre extrémité de ce tube étant encastrée dans une embase, les fibres optiques ayant leurs extrémités à l'intérieur dudit tube et tournées vers le miroir.

Selon un mode de réalisation de la présente invention, la lumière émise par la fibre optique centrale provient d'une diode électroluminescente.

Selon un mode de réalisation de la présente invention, les fibres émettrice et réceptrices sont de même diamètre, les fibres réceptrices étant au nombre de six.

Selon un mode de réalisation de la présente invention, les fibres émettrice et réceptrices sont des fibres à saut d'indice dont les extrémités sont dénudées et accolées.

Selon un mode de réalisation de la présente invention, les fibres optiques sont disposées à l'intérieur d'un deuxième tube disposé à l'intérieur du premier tube et solidaire du support.

Selon un mode de réalisation de la présente invention, l'extrémité du premier tube opposée à son extrémité encastrée est prolongée par un bras soumis à une force externe.

Selon un mode de réalisation de la présente invention, la paroi externe du tube ou le bras est soumis à l'action d'un écoulement de fluide, d'où il résulte que ledit capteur constitue un anémomètre-girouette ou un débitmètre.

Selon un mode de réalisation de la présente invention, l'extrémité du bras est munie d'un moyen de préhension, d'où il résulte que le capteur constitue un manche à balai.

Selon un autre aspect de la présente invention, il est prévu un procédé de fabrication du capteur décrit précédemment et comprenant les étapes suivantes : assembler les divers éléments du capteur dans ledit tube, munir le fond du tube d'une fenêtre transparente revêtue d'une couche réflectrice et d'une résine photosensible, irradier la résine à partir de la fibre centrale par un faisceau lumineux de longueur d'onde traversant ladite couche réflectrice, graver par des produits de photolithogravure classiques le produit photosensible et la couche réflectrice de manière à délimiter un miroir correspondant à la zone irradiée.

Ces objets, caractéristiques et avantages ainsi que d'autres de la présente invention apparaîtront plus clairement à la lecture de la description suivante de modes de réalisation particuliers faite en relation avec les figures jointes parmi lesquelles :
la figure 1 est une vue en perspective illustrant un schéma de principe d'un capteur en position de repos ;
la figure 2 est une vue analogue à la figure 1, dans le cas où le capteur détecte un déplacement ;
la figure 3 est une vue en bout du faisceau de fibres des figures 1 et 2 ;
la figure 4 illustre un exemple de montage d'un capteur selon la présente invention ;
les figures 5A et 5B illustrent deux étapes successives de fabrication d'un capteur selon la présente invention ; et
les figures 6A et 6B représentent deux étapes successives d'un procédé selon la présente invention de fabrication d'un capteur selon la présente invention.

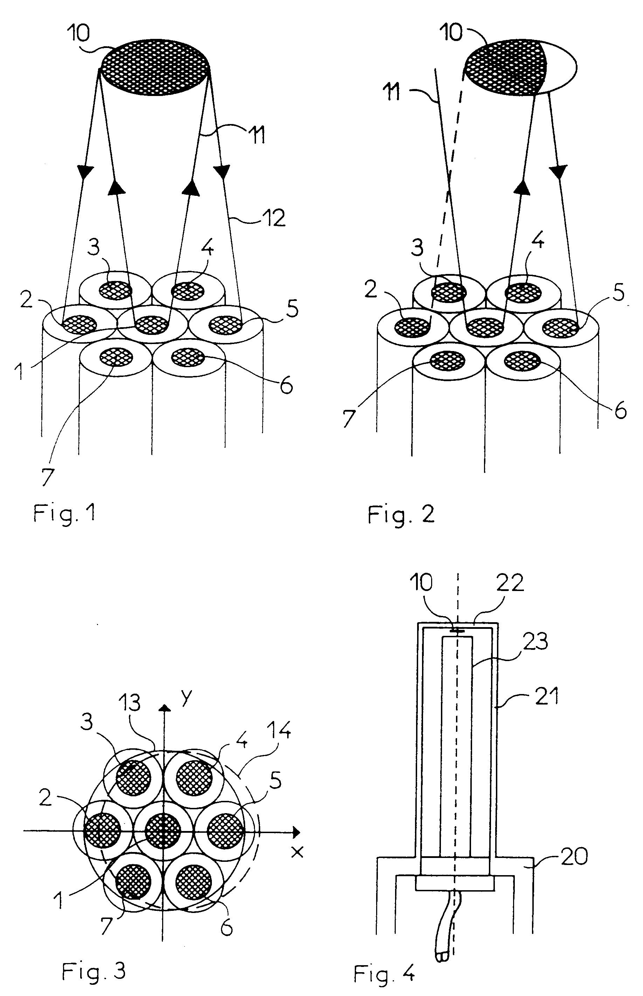

La figure 1 est une vue en perspective illustrant le schéma de principe d'un capteur utilisable selon la présente invention comprenant sept fibres optiques identiques 1 à 7. Les fibres 2 à 6 entourent la fibre centrale 1, c'est-à-dire que chacune des fibres 2 à 7 touche, au moins au niveau de son extrémité, la fibre centrale 1 et deux des fibres périphériques adjacentes.

Ces septs fibres sont coupées pour que leurs extrémités soient situées sensiblement dans un même plan orthogonal à leur axe. L'autre extrémité de la fibre centrale 1 est associée à un photoémetteur (non représenté) et l'autre extrémité de chacune des fibres 2 à 7 est associée à un photodétecteur (non représenté).

Le faisceau lumineux issu de la fibre 1 est dirigé vers un miroir circulaire 10 qui, au repos, est centré sur l'axe de la fibre 1 et orthogonal à celui-ci. La dimension de ce miroir 10 est choisie pour qu'elle corresponde à l'intersection de son plan avec le cône de lumière 11 émis par la fibre 1. La distance entre le plan du miroir 10 et le plan d'extrémité des fibres 1 à 7 est telle que le cône de lumière 12 renvoyé par ce miroir coupe le plan des extrémités des fibres selon un cercle 13 circonscrit aux régions utiles (coeur) des fibres 2 à 7 (voir figure 3). Ainsi, dans cette configuration, toutes les extrémités des fibres réceptrices sont complètement éclairées et reçoivent la même quantité de lumière.

La figure 2 représente le cas où le miroir 10 a été déplacé en translation vers la droite par rapport à sa position de repos de la figure 1. Le cône de lumière émis par la fibre 1 n'est pas modifié et seule une partie du miroir 10 sera éclairée tandis que les fibres situées à gauche sur la figure (fibres 2, 3 et 7) seront seulement partiellement éclairées et que les fibres 4, 5 et 6 continueront à recevoir la même quantité de lumière. Dans la vue de dessus de la figure 3, la tache lumineuse au niveau du plan de l'extrémité des fibres correspond alors à l'intersection du cercle 13 précédemment mentionné et d'un cercle 14 décalé vers la droite.

Les variations d'intensité lumineuse sur les capteurs associées aux fibres 2 à 7 fourniront donc une indication de la quantité de déplacement du miroir 10 ainsi que de la direction de ce déplacement. Des circuits de traitement et un programme approprié permettront de fournir directement des indications sur les valeurs d'amplitude et de direction du déplacement, en fonction de valeurs précalculées ou, de préférence, de résultats expérimentaux.

Pour obtenir des indications bien reproductibles, il est souhaitable que la lumière projetée sur les faces avant des fibres réceptrice soit homogène. Ainsi, on préférera injecter dans la fibre émettrice 1 la lumière provenant d'une diode électroluminescente (ayant par exemple une longueur d'onde de 850 nm) plutôt que d'une diode laser. En effet, dans ce dernier cas, le faisceau émis est généralement affecté de granularité.

Les figures 1 et 3 précédemment décrites étaient fortement schématiques et destinées à bien faire comprendre le principe de fonctionnement du capteur selon l'invention.

La figure 4 illustre un mode de réalisation de capteur selon l'invention. Ce capteur comprend une embase 20 solidaire d'un bâti fixe dans laquelle est encastré un tube cylindrique 21. Ce tube peut par exemple être en acier inoxydable et est susceptible d'être soumis à une force dont on veut déterminer l'intensité et l'orientation. L'extrémité du cylindre 21 opposée à sa région d'encastrement est fermée par une paroi transversale 22 qui porte sur sa face inférieure le miroir 10 dont la face réflectrice est tournée vers le bas dans la représentation de la figure.

Le faisceau de fibres est inséré à l'intérieur d'un deuxième tube 23 solidaire de l'embase fixe 20, l'extrémité des fibres étant tournée vers le miroir 10.

Ainsi, quand une force latérale est appliquée au tube 21, celui-ci se déforme à la façon d'une poutre et le miroir 10 se déplace essentiellement en translation dans son plan.

On pourra utiliser des fibres nues accolées. Ces fibres peuvent être du type à saut d'indice, comprenant chacune un coeur (figuré en hachures noires en figure 3) et une paroi externe. On pourra choisir des fibres dont le coeur présente un diamètre de 100 à 200 µm et dont le diamètre externe est de 140 à 280 µm, respectivement, ces fibres étant commercialement disponibles. Le miroir, dont les dimensions sont sélectionnées en fonction des indications données précédemment, pourra avoir un diamètre de l'ordre de quelques centaines de µm et être placé à une distance de quelques dixièmes à quelques millimètres de l'extrémité des fibres. On pourra ainsi détecter des déplacements latéraux du miroir de l'ordre de grandeur du diamètre des fibres, c'est-à-dire de l'ordre de une à quelques centaines de micromètres. Le tube pourra avoir une longueur de quelques dizaines de cm et une épaisseur de paroi de quelques dizièmes de mm.

On a indiqué précédemment que le miroir doit embrasser sensiblement exactement le cône lumineux émis par la fibre 1, ce miroir peut toutefois avoir des dimensions légèrement inférieures, ce qui change seulement l'étalonnage du système et l'amplitude des déplacements observables. Par contre, si le miroir a une dimension supérieure, il existera une zone morte en début de déplacement, ce qui peut être utile dans certaines applications.

En outre, bien que l'on ait indiqué précédemment que l'on utilise des fibres nues, on pourra aussi utiliser des fibres optiques munies de leur gaine usuelle. Toutefois, l'utilisation de fibres nues et le mode de réalisation actuellement préféré par les demandeurs. En effet, un mode de réalisation de l'assemblage de fibres consiste à dénuder celles-ci sur une longueur de par exemple une dizaine de centimètres, puis à apposer une goutte de colle à l'endroit de la jonction des fibres, celles-ci s'accolant automatiquement par capillarité pour fournir un assemblage dont on peut voir l'extrémité en figures 1 et 2. Ensuite, l'extrémité des fibres accolées peut être repolie.

Parmi les avantages de la présente invention, on peut mentionner que, du fait de l'angle d'ouverture limité des fibres (couramment de l'ordre de 20°), même s'il se produit des réflexions parasites sur les bords du miroir et les parois internes du tube 21, la lumière résultant de ces réflexions et dirigée vers les fibres réceptrices arrivera selon une forte probabilité selon une incidence non acceptée par ces fibres. Il y a donc là une protection naturelle contre la lumière parasite.

D'autre part, dans le mode de réalisation de la figure 4, l'ensemble du système de détection est protégé de l'atmosphère ambiante par le tube 21 sensible à l'application d'une force externe. L'intérieur de ce tube 21 peut par exemple être rempli d'un gaz neutre.

En outre, comme cela est classique quand on utilise pour une détection des fibres optiques, le photoémetteur, les photorécepteurs et les circuits électroniques associés peuvent être placés à distance par rapport au capteur de force lui-même, dans une enceinte électriquement blindée.

Le capteur selon l'invention peut trouver de nombreuses applications.

Par exemple, le tube 21 peut être inséré par un joint étanche dans une canalisation où l'on veut mesurer le débit, la déformation du tube étant assurée par la pression du fluide.

De même, le tube 21 pourra être placé dans l'atmosphère ambiante pour être sensible au vent et constituer une girouette-anémomètre. Dans ce cas, on pourra prévoir, de façon solidaire de la partie supérieure du tube un élément plus sensible au vent tel qu'une boule, par exemple du type balle de golf.

Selon une autre application de l'invention, le tube 21 peut être prolongé par un manche ou constituer lui-même ce manche, et le capteur fournira une indication des pressions appliquées au manche pour fournir un système de télécommande, par exemple du type des joysticks utilisés pour les jeux vidéo.

Bien entendu, la présente invention est susceptible de nombreuses variantes et modifications qui apparaîtront à l'homme de l'art, notamment en ce qui concerne la nature des matériaux et des fibres utilisées. Par exemple, on a supposé précédemment que la fibre émettrice était de même diamètre externe que les fibres réceptrices. On peut prévoir que ces fibres ont des diamètres différents. Si les fibres réceptrices ont un diamètre inférieur à la fibre émettrice, on pourra placer un plus grand nombre de fibres réceptrices autour de la fibre émettrice et inversement si les fibres réceptrices ont un diamètre supérieur.

De plus, bien que les fibres réceptrices aient été décrites comme adjacentes les unes aux autres on pourra choisir de les espacer, par exemple par des fibres neutres.

D'autre part, on a essentiellement décrit le cas où le miroir 10 est mis en translation dans son plan. Il est clair que la présente invention permettra de détecter des rotations de ce miroir, à condition de prévoir un étalonnage approprié.

Selon un aspect de la présente invention, il est prévu un procédé de fabrication du miroir 10 présent au fond du tube 21.

On pourrait prévoir un miroir fabriqué indépendamment du tube, par exemple une fibre à extrémité métallisée insérée dans la paroi 22. Toutefois, ceci pose des problèmes de centrage délicats. Plus généralement, tout procédé de fabrication dans lequel le miroir est fabriqué indépendamment du centrage du tube interne et du faisceau fourni par la fibre centrale posera en pratique des problèmes délicats. Ceci est d'autant plus vrai que, si l'on considère des ordres de grandeur pratiques, le miroir aura un diamètre de l'ordre de 300 µm et sera à une distance de l'extrémité du faisceau de fibre de l'ordre de 500 µm.

Pour résoudre ce problème, il est suggéré d'utiliser pour délimiter le miroir le cône de lumière de la fibre optique émettrice centrale après positionnement des fibres optiques dans le montage d'ensemble du capteur. Ainsi, le miroir sera automatiquement positionné en face de la fibre centrale et on évitera d'avoir recours à des procédés de réglage délicats.

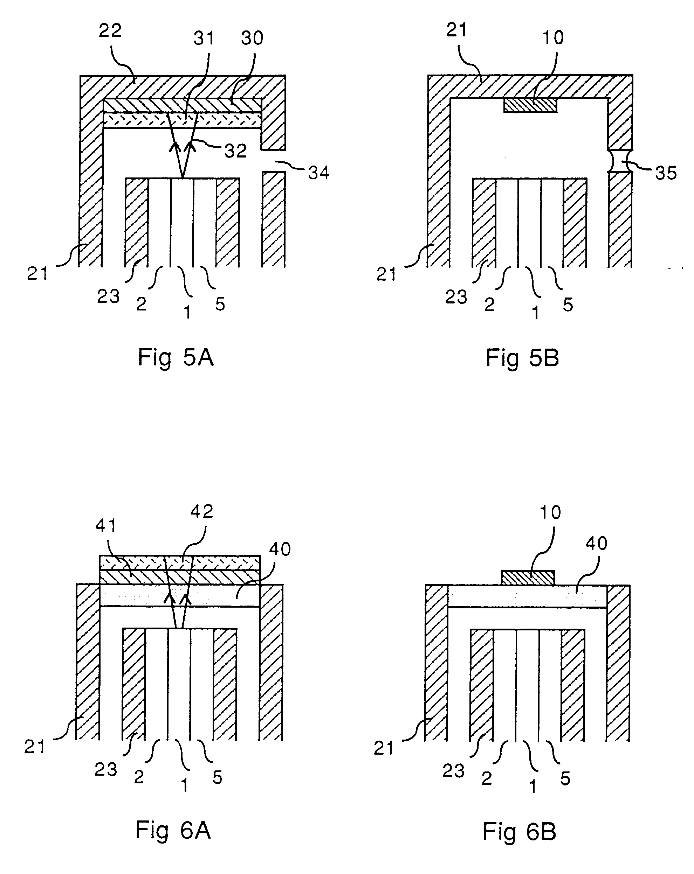

Ce type de procédé à auto-centrage sera décrit en relation avec les figures 5A-5B et 6A-6B. On notera tout d'abord que ces figures ne sont pas tracées à l'échelle mais que leurs dimensions ont été arbitrairement dilatées et réduites pour faciliter leur lisibilité.

Dans ces figures, des éléments déjà décrits précédemment sont désignés par les mêmes références.

Ainsi, on retrouve en figure 5A le tube externe 21 avec son fond 22, et le tube interne 23 contenant les fibres optiques parmi lesquelles la fibre centrale 1. Deux fibres latérales 2 et 5 sont visibles.

Sur la paroi interne du fond 22 sont déposées successivement une couche 30 formant miroir, par exemple une couche métallique, d'aluminium ou d'or, et une couche d'une résine photosensible négative 31 du type couramment utilisé en photolithographie. Après cela, un faisceau lumineux 32 est émis à partir de la fibre centrale 1 pour insoler la résine. Dans une première étape, la résine est éliminée aux emplacements non éclairés, puis la couche 30 est attaquée à ces emplacements. Enfin, la résine irradiée dans la partie centrale est enlevée pour faire apparaître la partie centrale de la couche réfléchissante et former ainsi le miroir 10 comme cela est illustré en figure 5B. Ce miroir aura alors exactement les dimensions désirées.

Le procédé décrit en relation avec les figures 5A et 5B donne des résultats satisfaisants mais implique de procéder à des opérations d'attaque chimique à l'intérieur du tube. Pour cela, on prévoit comme cela est représenté en figure 5A une ouverture 34 d'introduction et d'extraction des produits de gravure, ouverture qui doit ensuite être bouchée, par exemple par une colle ou une soudure 35. En outre, il est généralement souhaitable que les produits d'attaque ne touchent pas la face avant des fibres optiques ce qui rend l'opération extrêmement délicate étant donné la faible distance entre l'extrémité des fibres et les couches à graver.

Ainsi, un autre procédé de fabrication auto-aligné du miroir 10 a été imaginé et va être décrit en relation avec les figures 6A et 6B. Dans ce cas, le fond du tube 21 est constitué d'un matériau transparent aux longueurs d'onde utilisées, par exemple une fenêtre en verre 40. Cette fenêtre est revêtue, du côté externe au tube d'une couche 41 réflectrice aux longueurs d'onde auxquelles le capteur va être utilisé, et d'une couche de résine photosensible négative 42.

Selon l'invention, on prévoit d'émettre à partir de la fibre optique centrale 1 un faisceau lumineux à une longueur d'onde active pour la couche photosensible 42, cette longueur d'onde étant choisie en relation avec le matériau 41 pour le traverser au moins partiellement.

Par exemple, si la couche 41 est une couche mince métallique, elle constituera un bon miroir pour une longueur d'onde de travail du capteur de l'ordre de 850 mn ce qui correspond à des longueurs d'onde disponibles de diodes électroluminescentes. Pour insoler la résine, on utilisera une plus faible longueur d'onde, par exemple la raie bleue à 488 nm d'un laser à argon. Ce faisceau traversera effectivement une couche mince d'un métal tel que de l'or ou de l'aluminium. Une fois cette insolation effectuée, comme dans le cas décrit en relation avec les figures 5A et 5B, on commencera par éliminer la résine périphérique, puis l'on gravera la couche métallique pour former le miroir 10. La couche supérieure de résine au-dessus du miroir pourra être éliminée ou laissée en place. En outre, on pourra prévoir de déposer une couche finale d'encapsulation pour protéger le miroir.

Le procédé selon l'invention permet, une fois que le tube externe, le tube interne et les fibres sont en place, de fabriquer le miroir 10 de façon parfaitement centrée sans agir à l'intérieur de l'enceinte définie par le tube externe 21.

Bien entendu, la présente invention est susceptible de diverses variantes qui apparaîtront à l'homme de l'art, notamment en ce qui concerne les matériaux constitutifs des divers éléments du capteur et leur mode d'assemblage. Par exemple, dans la description précédente, en relation avec la figure 6A on a décrit des couches 41 et 42 déposées sur le fond 40 après assemblage. Elles pourraient bien évidemment être disposées sur ce fond avant assemblage et, alors qu'elles sont représentées comme faisant saillie à l'intérieur du tube, elles pourraient être disposées pour ne pas dépasser de celui-ci ou même y être insérées.

## Revendications

1. Capteur de direction et d'amplitude d'un déplacement comprenant un miroir solidaire d'un élément mobile et un ensemble photoémetteur et photorécepteur solidaire d'un repère fixe, ledit ensemble comprenant une fibre optique centrale (1) émettant un cône de lumière vers le miroir (10) et des fibres optiques réceptrices (2 à 7) dont chacune est en contact avec la fibre centrale ; le miroir étant circulaire et son diamètre et sa distance axiale de l'extrémité des fibres étant tels, en position centrée, que son diamètre correspond sensiblement à celui du cône de lumière (11) émis par la fibre centrale et que le cône de lumière (12) renvoyé tangente sensiblement les bords radiaux externes des fibres réceptrices ; caractérisé en ce que le miroir (10) est disposé sur la paroi transversale extrême (22) d'un tube (21), perpendiculairement à l'axe de ce tube et de façon centrée, l'autre extrémité de ce tube étant encastrée dans une embase (20), les fibres optiques (1 à 7) ayant leurs extrémités à l'intérieur dudit tube et tournées vers le miroir.

2. Capteur selon la revendication 1, caractérisé en ce que la lumière émise par la fibre optique centrale provient d'une diode électroluminescente.

3. Capteur selon la revendication 1, caractérisé en ce que les fibres émettrice et réceptrices sont de même diamètre, les fibres réceptrices étant au nombre de six.

4. Capteur selon la revendication 1, caractérisé en ce que les fibres émettrice et réceptrices sont des fibres à saut d'indice dont les extrémités sont dénudées et accolées.

5. Capteur selon la revendication 1, caractérisé en ce que les fibres optiques sont disposées à l'intérieur d'un deuxième tube (23) disposé à l'intérieur du premier tube et solidaire du support.

6. Capteur selon la revendication 1, caractérisé en ce que l'extrémité dudit tube opposée à son extrémité encastrée est prolongée par un bras soumis à une force externe.

7. Capteur selon la revendication 6, caractérisé en ce que la paroi externe du tube ou le bras est soumis à l'action d'un écoulement de fluide, d'où il résulte que ledit capteur constitue un anémomètre-girouette ou un débitmètre.

8. Capteur selon la revendication 6, caractérisé en ce que l'extrémité du bras est munie d'un moyen de préhension, d'où il résulte que le capteur constitue un manche à balai.

9. Procédé de fabrication d'un capteur selon la revendication 1, caractérisé en ce qu'il comprend les étapes suivantes :
assembler les divers éléments du capteur dans ledit tube (21),
munir le fond du tube d'une fenêtre transparente (40) revêtue, à l'extérieur du tube, d'une couche réflectrice (41) et d'une résine photosensible (42),
irradier la résine à partir de la fibre centrale par un faisceau lumineux à une longueur d'onde traversant ladite couche réflectrice,
graver par des produits de photolithogravure classiques la résine photosensible (42) et la couche réflectrice (41) de manière à délimiter un miroir (10) correspondant à la zone irradiée.

10. Procédé selon la revendication 9, caractérisé en ce que la couche réflectrice est une couche métallique mince.

## Patentansprüche

1. Sensor zum Erfassen von Richtung und Amplitude einer Verlagerung, mit einem Spiegel, der mit einem beweglichen Element fest verbunden ist, und einer Lichtsende- und Lichtempfänger-Anordnung, die mit einer festen Referenz verbunden ist, wobei diese Anordnung eine zentrale Lichtfaser (1), die einen Lichtkegel gegen den Spiegel (10) aussendet, und als Empfänger Lichtfasern (2 bis 7) aufweist, von denen jede in Kontakt mit der zentralen Faser ist, und wobei der Spiegel kreisförmig ist und sein Durchmesser und die axiale Entfernung von dem Ende der Fasern derart sind, daß in der zentrierten Position sein Durchmesser im wesentlichen demjenigen des von der zentralen Faser ausgesendeten Lichtkegels (11) entspricht und der reflektierte Lichtkegel (12) im wesentlichen die radial äußeren Ränder der empfangenden Fasern berührt, dadurch gekennzeichnet, daß der Spiegel (10) auf der Querwand (22) am Ende eines Rohres (21) senkrecht zu der Achse des Rohres und hiermit zentriert angeordnet ist, wobei das andere Ende dieses Rohres in einem Sockel (20) eingebettet ist und die Enden der Lichtfasern (1 bis 7) im Inneren dieses Rohres gelegen und gegen den Spiegel gerichtet sind.

2. Sensor nach Anspruch 1, dadurch gekennzeichnet, daß das von der zentralen Lichtfaser ausgesendete Licht von einer Elektrolumineszenzdiode stammt.

3. Sensor nach Anspruch 1, dadurch gekennzeichnet, daß die sendende Faser und die empfangenden Fasern den gleichen Durchmesser haben, und daß die Anzahl der empfangenden Fasern sechs ist.

4. Sensor nach Anspruch 1, dadurch gekennzeichnet, daß die sendende Lichtfaser und die empfangenden Lichtfasern Fasern mit einem Indexsprung sind, deren Enden nicht ummantelt und aneinander gefügt sind.

5. Sensor nach Anspruch 1, dadurch gekennzeichnet, daß die Lichtfasern im Inneren eines zweiten Rohres (23) angeordnet sind, welches im Inneren des ersten Rohres angeordnet und fest mit dem Träger verbunden ist.

6. Sensor nach Anspruch 1, dadurch gekennzeichnet, daß das Ende des Rohres, das dem eingebetteten Ende gegenüberliegt, durch einen Arm verlängert ist, der einer externen Kraft ausgesetzt ist.

7. Sensor nach Anspruch 6, dadurch gekennzeichnet, daß die Außenwand des Rohres oder der Arm der Strömung einer Flüssigkeit ausgesetzt ist, so daß der Sensor ein die Richtung anzeigendes Anemometer oder ein Durchflußmesser ist.

8. Sensor nach Anspruch 6, dadurch gekennzeichnet, daß das Ende des Armes mit einem Griff versehen ist, so daß der Sensor einen Steuerknüppel bildet.

9. Verfahren zum Herstellen eines Sensors nach Anspruch 1, gekennzeichnet durch folgende Schritte:
Zusammensetzen der verschiedenen Elemente des Sensors in dem besagten Rohr (21),
Versehen des Bodens des Rohres mit einem transparenten Fenster (40), das außen am Rohr mit einer reflektierenden Schicht (41) und mit einem lichtempfindlichen Harz (42) bedeckt ist,
Bestrahlen des Harzes mit Hilfe der zentralen Faser durch ein Lichtbündel mit einer Wellenlänge, das die reflektierende Schicht durchdringt,
Ätzen des lichtempfindlichen Harzes (42) und der reflektierenden Schicht (41) mit herkömmlichen fotolithografischen Stoffen derart, daß ein Spiegel (10) begrenzt wird, der der bestrahlten Zone entspricht.

10. Verfahren nach Anspruch 9, dadurch gekennzeichnet, daß die reflektierende Schicht eine dünne Metallschicht ist.

## Claims

1. A direction and amplitude sensor for detecting displacement comprising a mirror integral with a mobile element and a photoemitter and photoreceptor assembly integral with a reference frame, said assembly comprising a central optical fiber (1) emitting a light cone towards the mirror (10) and receiving optical fibers (2-7), each of which is in contact with the central fiber; the mirror being circular and its diameter and its axial distance from the extremity of the fibers being such, in centered position, that its diameter substantially corresponds to that of the light cone (11) generated by the central fiber and that the reflected light cone (12) is substantially tangent to the external radial edges of the receiving fibers; characterized in that the mirror (10) is fitted on an end transverse wall (22) of a tube (21), perpendicularly to the axis of this tube and centered therewith, the other extremity of this tube being embedded in a frame (20), the optical fibers (1-7) having their extremities inside said tube and oriented towards the mirror.

2. A sensor according to claim 1, characterized in that the light emitted by the central optic fiber originates from an electroluminescent diode.

3. A sensor according to claim 1, characterized in that the emitting and receiving fibers have the same diameter, six receiving fibers being provided.

4. A sensor according to claim 1, characterized in that the emitting and receiving fibers are index skipping fibers, the extremities of which are bare and joined side by side.

5. A sensor according to claim 1, characterized in that the optical fibers are arranged inside a second tube (23) arranged inside the first tube and integral with the support.

6. A sensor according to claim 1, characterized in that the extremity of said first tube opposite to its embedded extremity is prolonged by an arm submitted to an external force.

7. A sensor according to claim 6, characterized in that the external wall of the tube or of the arm is submitted to the action of a fluid flow, whereby said sensor constitutes a speed and direction anemometer or a flow-meter.

8. A sensor according to claim 6, characterized in that the extremity of the arm is fitted with holding means, whereby the sensor constitutes a joy-stick.

9. A method for manufacturing a sensor according to claim 1, characterized in that it comprises the following steps:
assembling the various components of the sensor in said tube (21);
providing the bottom of the tube with a transparent window (40) coated, at the external portion of the tube, with a reflecting layer (41) and a photoresist (42);
irradiating the resist from the central fiber by means of a light beam at a wavelength passing through said reflecting layer;
etching by means of conventional photoetching process the photoresist (42) and the reflecting layer (41) so as to delineate a mirror (10) corresponding to the irradiated area.

10. A method according to claim 9, characterized in that said reflecting layer is a thin metal layer.
